# EUROPÄISCHE PATENTSCHRIFT

(11) **EP 1 526 779 B1**
(45) Veröffentlichungstag und Bekanntmachung des Hinweises auf die Patenterteilung: **26.09.2007**
(21) Anmeldenummer: 03737828.8
(22) Anmeldetag: 24.07.2003
(51) Int. Cl.: A23G 3/00

(54) **SÜSSWAREN AUF DER BASIS VON KRÄUTERMISCHUNGEN**
CONFECTIONERY MADE FROM HERBAL MIXTURES
CONFISERIE A BASE DE MELANGES D'HERBES

(30) Priorität: 25.07.2002 WO PCT/CH02/00418
(43) Veröffentlichungstag der Anmeldung: 04.05.2005
(73) Patentinhaber: Ricola AG, 4242 Laufen (CH)
(72) Erfinder: LUTZ, Christina, CH-4242 Laufen (CH); RICHTERICH, Felix, CH-4144 Arlesheim (CH)
(74) Vertreter: Braun, André jr.
(86) Internationale Anmeldenummer: PCT/CH2003/000504
(87) Internationale Veröffentlichungsnummer: WO 2004/010789

(56) Entgegenhaltungen:
- EP-A- 0 593 774
- EP-A- 0 686 351
- DE-U- 20 115 366
- DE-U- 29 908 059
- GB-A- 1 526 020
- US-A- 4 623 543
- US-A- 5 338 809

## Beschreibung

Die vorliegende Erfindung betrifft Süsswaren auf der Basis von Kräutermischungen, welche einen Extrakt aus einer Mischung von mehreren Kräutern oder eine Mischung einer entsprechenden Anzahl von Extrakten aus mindestens einem Kraut enthalten.

Die erfindungsgemässen Süsswaren sind dadurch gekennzeichnet, dass sie zusätzlich einen Extrakt aus *Stevia rebaudiana* (lateinisch Eupatorium rebaudianum) enthalten. Dieser Umstand ist mit wesentlichen Vorteilen verbunden, insbesondere
- ergibt die Zugabe eines Extrakts aus *Stevia rebaudiana* einen überraschenden Effekt, denn im Gegensatz zu einer Zugabe von isoliertem Steviosid, dem für die Süsskraft verantwortlichen Inhaltsstoff von *Stevia rebaudiana,* ergibt sich eine Geschmacksveränderung in den Süsswaren, bei welcher nicht der Geschmack von Steviosid besonders hervortritt, sondern der Gesamtgeschmack sich verändert;
- resultiert eine erwünschte Geschmacksveränderung, wobei nicht der Geschmack von *Stevia rebaudiana* in den Vordergrund rückt, sondern ein die Kräuter unterstreichender Gesamtgeschmack entsteht;
- ergibt sich eine Süssung mit grosser Süsskraft (die Blätter von *Stevia rebaudiana* sind etwa 10-20 mal süsser als Zucker, und der isolierte Süssstoff Steviosid ist etwa 300 mal süsser als Zucker!);
- erfolgt eine natürliche Süssung, ohne Kalorien zuzuführen;
- erfolgt eine natürliche Süssung, ohne Karies zu verursachen; und
- tritt eine kariesprophylaktische Wirkung auf.

Die Pflanze *Stevia rebaudiana (Bertoni) Hemsl.* gehört zur Familie *Compositae.* Auf Deutsch heisst diese Pflanze "Süssstoffpflanze", und für die Droge *Stevia rebaudianae folium* wird auch die deutsche Bezeichnung "Honigkrautblätter" verwendet.

Die Verwendung von Stevia-Extrahten als Süßungsmittel ist aus z.B. der GB-1526020, der EP-05937791, oder der US-5.338.809 bekannt.

Es sind bereits sehr zahlreiche verschiedene, teilweise recht komplexe Verfahren zur Extraktion und/oder Reinigung von Steviosid, dem für die Süsskraft verantwortlichen Inhaltsstoff von *Stevia rebaudiana,* beschrieben worden. Die Anwendung solcher Verfahren ist jedoch bei der Herstellung der erfindungsgemässen Süsswaren nicht erforderlich, weil hierbei *Stevia rebaudiana* als Kraut eingesetzt wird.

Die hieraus resultierende besonders vorteilhafte Geschmacksveränderung der erfindungsgemässen Süsswaren zeichnet sich erstaunlicherweise dadurch aus, dass sich ein leicht adstringierender Kräuter-Honig-Geschmack mit frischem, kühlendem Abgang ergibt, wobei - je nach der Form der erfindungsgemässen Süssware (z.B. Hartbonbon, Getränk, Sirup) - der zeitliche Verlauf der Geschmacksentwicklung unterschiedlich sein kann. Dies ist bei Zusatz von isoliertem Steviosid nicht der Fall: Hier ergibt sich - erwartungsgemäss - ein süsser, lakritzartiger Geschmack.

In einem ersten Aspekt betrifft die vorliegende Erfindung Süsswaren in nicht flüssiger Form wie in Anspruch 1 definiert.

In einem zweiten Aspekt betrifft die vorliegende Erfindung Süsswaren in Form von Sirup wie in Anspruch 2 definiert.

Folglich betrifft die vorliegende Erfindung Süsswaren auf der Basis von Kräutermischungen, enthaltend einen Extrakt aus einer Mischung der Kräuter Pfefferminze, Salbei, Schafgarbe und Thymian oder eine Mischung einer entsprechenden Anzahl von Extrakten aus mindestens einem dieser Kräuter, welche dadurch gekennzeichnet sind, dass sie zusätzlich einen Extrakt aus *Stevia rebaudiana* enthalten.

Die erfindungsgemässen Süsswaren können dadurch hergestellt werden, dass man
- entweder die getrockneten Kräuter vermischt, diese Mischung extrahiert und den Extrakt gegebenenfalls eindickt; oder eine entsprechende Anzahl von gegebenenfalls eingedickten Extrakten aus mindestens einem der getrockneten Kräuter miteinander vermischt und das Gemisch gegebenenfalls eindickt; worauf man die erhaltene Mischung mit gegebenenfalls eingedicktem Extrakt aus dem getrockneten Kraut *Stevia rebaudiana* vermischt;
- oder die getrockneten Kräuter und das getrocknete Kraut von *Stevia rebaudiana* miteinander vermischt, diese Mischung extrahiert und den Extrakt gegebenenfalls eindickt;
worauf man die erhaltene Mischung bzw. den erhaltenen gegebenenfalls eingedickten Extrakt zu Süsswaren der gewünschten Form verarbeitet.

Zweckmässigerweise werden sämtliche Kräuter, welche in einer bestimmten erfindungsgemässen Süssware berücksichtigt werden sollen, in getrockneter Form miteinander und mit getrocknetem Kraut *Stevia rebaudiana* vermischt, worauf dann extrahiert und der Extrakt gegebenenfalls eingedickt wird; oder es werden einerseits sämtliche dieser Kräuter in getrockneter Form miteinander vermischt, worauf dann extrahiert und der Extrakt gegebenenfalls eingedickt wird, und anderseits wird das getrocknete Kraut *Stevia rebaudiana* extrahiert und der Extrakt gegebenenfalls eingedickt, worauf dann die beiden gegebenenfalls eingedickten Extrakte miteinander vermischt werden.

Die Extraktion der getrockneten Kräuter erfolgt zweckmässigerweise mittels Wasser, die Extraktion des getrockneten Krauts *Stevia rebaudiana* erfolgt zweckmässigerweise ebenfalls mittels Wasser, und auch die Extraktion einer Mischung der getrockneten Kräuter mit dem getrockneten Kraut *Stevia rebaudiana* erfolgt zweckmässigerweise mittels Wasser. Neben Wasser können selbstverständlich auch andere Lösungsmittel zur Anwendung kommen, beispielsweise niedere Alkanole (d.h. C₁-C₆-Alkanole), vorzugsweise Ethanol, oder Gemische solcher Alkanole mit Wasser.

Falls die Extrakte eingedickt werden, so werden sie zweckmässigerweise auf etwa 1/30 bis etwa 1/36, insbesondere auf etwa 1/33 ihres Volumens reduziert. Die Extrakte können aber auch ohne vorangehendes Eindicken, als sog. Teeauszüge, zu Süsswaren verarbeitet werden; dabei werden bei der Herstellung der erfindungsgemässen Süsswaren - anstatt Wasser und eingedickte Extrakte - derartige Teeauszüge eingesetzt.

Für die erfindungsgemässen Süsswaren in nicht flüssiger Form und in Form von Sirup werden die folgenden Kräuter als Basis eingesetzt:
- Pfefferminze *(Mentha piperita L.);*
- Salbei *(Salvia officinalis L.);*
- Schafgarbe *(Achillea millefolium L.);* und
- Thymian *(Thymus vulgaris L.);*
die nicht durch ihre Form (in nicht flüssiger Form bzw. in Form von Sirup) gekennzeichneten erfindungsgemässen Süsswaren bestehen zwingend auf der Basis einer Mischung dieser vier Kräuter.

Zusätzlich zu diesen vier Kräutern kann man in sämtliche erfindungsgemässen Süsswaren auch
- Zitronenmelisse *(Melissa officinalis L.)*
   einsetzen und/oder mit Vorteil auch eines oder mehrere der folgenden Kräuter:
- Spitzwegerich *(Plantago major L.);*
- Eibisch *(Althaea officinalis L.);*
- Frauenmantel *(Alchemilla vulgaris L.);*
- Holunder *(Sambucus ebulus L.);*
- Schlüsselblume *(Primula veris L.);*
- Bibernelle *(Pimpinella anisum L.);*
- Ehrenpreis *(Veronica officinalis L.);*
- Malve *(Malva sylvestris L.);* und
- Andorn *(Marrubium vulgare L.).*

Die erfindungsgemässen Süsswaren können in verschiedenen nicht flüssigen Formen vorliegen, die an sich herkömmlich sind, wie etwa
- in Form von Hartbonbons, beispielsweise in Form von massiven oder gefüllten Hartbonbons, welche geprägt, gegossen, geformt oder gepresst wurden und bei deren Lutschen sich langsam ein honigartiger Kräutergeschmack ausbildet;
- in gummiartiger Konsistenz bzw. Struktur, beispielsweise in Form von stückartigen massiven oder gefüllten Bonbons, welche gegossen, geformt, geprägt oder gepresst wurden und bei deren langsamem Kauen sich schnell ein typischer Kräutergeschmack entwickelt;
- in Form von Kaubonbons; oder
- in Form von Kaugummi.
Weiterhin können die erfindungsgemässen Süsswaren, wie oben erwähnt, in Form von Sirup vorliegen.

Die nicht durch ihre Form (in nicht flüssiger Form bzw. in Form von Sirup), sondern durch die Verwendung der vier Kräuter Pfefferminze, Salbei, Schafgarbe und Thymian gekennzeichneten erfindungsgemässen Süsswaren können in sämtlichen der vorstehend diskutierten Formen vorliegen und darüber hinaus auch in Form von Kräutergetränken, beispielsweise in einer Form, aus welcher Instantgetränke zubereitet werden können.

Die Herstellung solcher Formen erfolgt auf herkömmliche und jedem Fachmann geläufige Weise.

Die nachfolgenden Beispiele sollen die Erfindung näher erläutern, ihren Umfang jedoch in keiner Weise einschränken.

### Beispiel 1

Ein Gewichtsteil eines Gemisches der fünf getrockneten Kräuter Pfefferminze (30%), Zitronenmelisse (25%), Salbei (20%), Schafgarbe (15%) und Thymian (10%) wird mit Wasser extrahiert, und der Extrakt wird auf 1/33 seines Volumens eingedickt.

Separat wird ein Gewichtsteil getrocknetes Kraut von *Stevia rebaudiana* mit Wasser extrahiert, und der Extrakt wird auf 1/33 seines Volumens eingedickt.

Der eingedickte Extrakt aus den fünf Kräutern und der eingedickte Stevia-Extrakt werden im Verhältnis 1 : 1 vermischt.

Dieses Gemisch kann wie in Beispiel 3 beschrieben zu einem Hartbonbon verarbeitet werden.

### Beispiel 2

Ein Gewichtsteil eines Gemisches der fünf getrockneten Kräuter Pfefferminze (30%), Zitronenmelisse (25%), Salbei (20%), Schafgarbe (15%) und Thymian (10%) wird mit drei Gewichtsteilen von getrocknetem Kraut von *Stevia rebaudiana* vermischt. Das Gemisch wird mit Wasser extrahiert, und der Extrakt wird auf 1/33 seines Volumens eingedickt. Dieser Extrakt kann wie in Beispiel 4 beschrieben zu einer gummiartigen Süssware verarbeitet werden.

### Beispiel 3

### Herstellung eines Kräuter-Hartbonbons

Zucker und Glukosesirup werden in Wasser gelöst, gekocht und vakuumiert, worauf man das gemäss Beispiel 1 erhaltene Gemisch, Aromen und Säuerungsmittel unter die gekochte Zuckermasse zieht. Man vermischt bei Siedetemperatur, lässt abkühlen und prägt die abgekühlte Masse zu Hartbonbons.

### Beispiel 4

### Herstellung einer gummiartigen Kräuter-Süssware

Gummi arabicum und Sorbitolsirup werden in Wasser gelöst. Man erhitzt zum Sieden, fügt den gemäss Beispiel 2 erhaltenen Extrakt sowie Aromen und Säuerungsmittel zu und vermischt. Man giesst das Gemisch in geeignete Formen, worauf man die entstandenen Formlinge abkühlen und trocknen lässt, sie auspudert und sie glänzt.

## Patentansprüche

1. Süsswaren in nicht flüssiger Form auf der Basis von Kräutermischungen, enthaltend einen Extrakt aus einer Mischung der Kräuter Pfefferminze, Salbei, Schafgarbe und Thymian, oder eine Mischung einer entsprechenden Anzahl von Extrakten aus mindestens einem dieser Kräuter, **dadurch gekennzeichnet, dass** sie zusätzlich einen Extrakt aus *Stevia rebaudiana* enthalten.

2. Süsswaren in Form von Sirup auf der Basis von Kräutermischungen, enthaltend einen Extrakt aus einer Mischung der Kräuter Pfefferminze, Salbei, Schafgarbe und Thymian, oder eine Mischung einer entsprechenden Anzahl von Extrakten aus mindestens einem dieser Kräuter, **dadurch gekennzeichnet, dass** sie zusätzlich einen Extrakt aus *Stevia rebaudiana* enthalten.

3. Süsswaren gemäss Anspruch 1 oder 2, **dadurch gekennzeichnet, dass** die Kräuter zusätzlich Zitronenmelisse umfassen.

4. Süsswaren gemäss einem der Ansprüche 1 - 3, **dadurch gekennzeichnet, dass** die Kräuter zusätzlich mindestens eines der Kräuter Spitzwegerich, Eibisch, Frauenmantel, Holunder, Schlüsselblume, Bibernelle, Ehrenpreis, Malve und Andorn umfassen.

5. Süsswaren gemäss einem der Ansprüche 1, 3 und 4, **dadurch gekennzeichnet, dass** sie in Form von Hartbonbons vorliegen.

6. Süsswaren gemäss Anspruch 5, **dadurch gekennzeichnet, dass** sie in Form von massiven oder gefüllten Hartbonbons vorliegen, welche geprägt, gegossen, geformt oder gepresst wurden.

7. Süsswaren gemäss einem der Ansprüche 1, 3 und 4, **dadurch gekennzeichnet, dass** sie in gummiartiger Konsistenz bzw. Struktur vorliegen.

8. Süsswaren gemäss Anspruch 7, **dadurch gekennzeichnet, dass** sie in Form von stückartigen massiven oder gefüllten Bonbons vorliegen, welche gegossen, geformt, geprägt oder gepresst wurden.

9. Süsswaren gemäss einem der Ansprüche 1, 3 und 4, **dadurch gekennzeichnet, dass** sie in Form von Kaubonbons vorliegen.

10. Süsswaren gemäss einem der Ansprüche 1, 3 und 4, **dadurch gekennzeichnet, dass** sie in Form von Kaugummi vorliegen.

11. Süsswaren gemäss einem der Ansprüche 1, 3 und 4, **dadurch gekennzeichnet, dass** sie in einer Form vorliegen, aus welcher Instantgetränke zubereitet werden können.

12. Verfahren zur Herstellung von Süsswaren gemäss einem der Ansprüche 1 - 11, **dadurch gekennzeichnet, dass** man
- entweder die getrockneten Kräuter vermischt, diese Mischung extrahiert und den Extrakt gegebenenfalls eindickt; oder eine entsprechende Anzahl von gegebenenfalls eingedickten Extrakten aus mindestens einem der getrockneten Kräuter miteinander vermischt und das Gemisch gegebenenfalls eindickt; worauf man die erhaltene Mischung mit gegebenenfalls eingedicktem Extrakt aus dem getrockneten Kraut *Stevia rebaudiana* vermischt;
- oder die getrockneten Kräuter und das getrocknete Kraut von *Stevia rebaudiana* miteinander vermischt, diese Mischung extrahiert und den Extrakt gegebenenfalls eindickt;
worauf man die erhaltene Mischung bzw. den erhaltenen gegebenenfalls eingedickten Extrakt zu Süsswaren der gewünschten Form verarbeitet.

## Claims

1. A confectionery article in non-liquid form based on herbal mixtures comprising an extract of a mixture of the herbs peppermint, sage, yarrow, and thyme, or a mixture of a corresponding number of extracts of at least one of these herbs, **characterized in that** it additionally comprises an extract of *stevia rebaudiana.*

2. A confectionery article in the form of syrup based on herbal mixtures comprising an extract of a mixture of the herbs peppermint, sage, yarrow, and thyme, or a mixture of a corresponding number of extracts of at least one of these herbs, **characterized in that** it additionally comprises an extract of *stevia rebaudiana.*

3. The confectionery article as claimed in claim 1 or 2, **characterized in that** the herbs comprise additionally lemon balm.

4. The confectionery article as claimed in one of claims 1-3, **characterized in that** the herbs additionally comprise at least one of the herbs common plantain, marshmallow, lady's mantle, elder, cowslip, anise, speedwell, mallow and horehound.

5. The confectionery article as claimed in one of claims 1, 3 and 4, **characterized in that** it is present in the form of hard sweets.

6. The confectionery article as claimed in claim 5, **characterized in that** it is present in the form of solid or filled hard sweets which have been stamped, cast, molded or pressed.

7. The confectionery article as claimed in one of claims 1, 3 and 4, **characterized in that** it is present in rubber-like consistency or structure.

8. The confectionery article as claimed in claim 7, **characterized in that** it is present in the form of piece-like solid or filled sweets which have been cast, molded, stamped or pressed.

9. The confectionery article as claimed in one of claims 1, 3 and 4, **characterized in that** it is present in the form of chewing sweets.

10. The confectionery article as claimed in one of claims 1, 3 and 4, **characterized in that** it is present in the form of chewing gum.

11. The confectionery article as claimed in claim 1, 3 and 4, **characterized in that** it is present in a form from which instant drinks can be prepared.

12. A method for producing confectionery articles as claimed in one of claims 1-11, **characterized in that**
- either the dried herbs are mixed, this mixture is extracted and the extract, if appropriate, thickened; or a corresponding number of, if appropriate, thickened extracts of at least one of the dried herbs are mixed with one another and the mixture is, if appropriate, thickened; whereupon the resultant mixture is mixed with, if appropriate, thickened extract of the dried herb *Stevia rebaudiana;*
- or the dried herbs and the dried herb of *Stevia rebaudiana* are mixed with one another, this mixture is extracted and the extract is, if appropriate, thickened;
Whereupon the resultant mixture or the resultant, if appropriate, thickened extract is processed to give confectionary articles of the desired form.

## Revendications

1. Confiserie sous forme non liquide à base de mélanges d'herbes, comprenant un extrait d'un mélange des herbes menthe, sauge, millefeuille (achillée) et thym, ou un mélange d'une quantité correspondante d'extraits d'au moins une de ces herbes, **caractérisée en ce qu'**elle comprend en plus un extrait de *stevia rebaudiana.*

2. Confiserie sous forme de sirop à base de mélanges d'herbes, comprenant un extrait d'un mélange des herbes menthe, sauge, millefeuille (achillée) et thym, ou un mélange d'une quantité correspondante d'extraits d'au moins une de ces herbes, **caractérisée en ce qu'**elle comprend en plus un extrait de *stevia rebaudiana.*

3. Confiserie selon la revendication 1 ou 2, **caractérisée en ce que** les herbes comprennent en plus de la mélisse citronnelle.

4. Confiserie selon l'une des revendications 1 à 3, **caractérisée en ce que** les herbes comprennent en plus au moins une des herbes plantain, guimauve, alchémille, sureau, primevère, pimprenelle, véronique, mauve et marrube.

5. Confiserie selon l'une des revendications 1, 3 et 4, **caractérisée en ce qu'**elle se présente sous forme de bonbons durs.

6. Confiserie selon la revendication 5, **caractérisée en ce qu'**elle se présente sous forme de bonbons durs massifs ou fourrés qui ont été marqués, moulés, façonnés ou pressés.

7. Confiserie selon l'une des revendications 1, 3 et 4, **caractérisée en ce qu'**elle a une consistance resp. une structure gommeuse.

8. Confiserie selon la revendication 7, **caractérisée en ce qu'**elle se présente sous forme de bonbons massifs ou fourrés en pièces qui ont été moulés, façonnés, marqués ou pressés.

9. Confiserie selon l'une des revendications 1, 3 et 4, **caractérisée en ce qu'**elle se présente sous forme de bonbons à mâcher.

10. Confiserie selon l'une des revendications 1, 3 et 4, **caractérisée en ce qu'**elle se présente sous forme de chewing-gums.

11. Confiserie selon l'une des revendications 1, 3 et 4, **caractérisée en ce qu'**elle se présente sous une forme à partir de laquelle une boisson instantanée peut être préparée.

12. Procédé pour la production de confiserie selon l'une des revendications 1 à 11,
**caractérisé en ce que**
- soit les herbes séchées sont mélangées, ce mélange est extrait et l'extrait optionnellement épaissi ; ou une quantité correspondante d'extraits optionnellement épaissis d'au moins une des herbes séchées sont mélangés ensemble et le mélange est optionnellement épaissi ; puis le mélange obtenu est mélangé avec l'extrait optionnellement épaissi de l'herbe séchée *stevia rebaudiana ;*
- soit les herbes séchées et l'herbe séchée de *stevia rebaudiana* sont mélangées ensemble, ce mélange est extrait et l'extrait optionnellement épaissi ;
puis le mélange obtenu resp. l'extrait optionnellement épaissi obtenu est travaillé en de la confiserie dans la forme souhaitée.
